# EUROPÄISCHE PATENTSCHRIFT

(11) **EP 3 399 729 B1**
(45) Veröffentlichungstag und Bekanntmachung des Hinweises auf die Patenterteilung: **11.03.2020**
(21) Anmeldenummer: 18179829.9
(22) Anmeldetag: 17.10.2014
(51) Int. Cl.: H04M 1/04, H04B 1/38, B62B 3/14, G06F 1/16, H04B 1/3877, H04W 12/08, G06Q 20/18, G07C 9/00, G06Q 30/06, G07F 7/08, H04W 4/80, G07G 1/00, G07F 7/06, G06Q 20/32, H04M 1/725

(54) **AUTOMATISCHE BEREITSTELLUNG VON HALTERUNGEN FÜR MOBILE TELEKOMMUNIKATIONSENDGERÄTE**
AUTOMATIC PROVISIONING OF HOLDING DEVICES FOR MOBILE TELECOMMUNICATION TERMINALS
FOURNITURE AUTOMATIQUE DE SUPPORTS POUR TERMINALS DE TÉLÉCOMMUNICATIONS MOBILE

(30) Priorität: 17.10.2013 DE 102013111478
(43) Veröffentlichungstag der Anmeldung: 07.11.2018
(62) Teilanmeldung aus: 14786200.7
(73) Patentinhaber: Wieth, Franz, 82178 Puchheim (DE); Filosi, Andreas, 82178 Puchheim (DE)
(72) Erfinder: WIETH, Franz, 82178 Puchheim (DE); SONNENDORFER, Horst, verstorben (DE)
(74) Vertreter: Braun-Dullaeus Pannen Emmerling Patent- & Rechtsanwaltspartnerschaft mbB

(56) Entgegenhaltungen:
- US-A1- 2006 219 780
- US-A1- 2010 072 715
- US-A1- 2012 191 562
- US-B1- 6 725 206

## Beschreibung

Die Erfindung betrifft eine Halterung für ein mobiles Telekommunikations-Endgerät, insbesondere ein Smartphone, wobei die Halterung eine Aufnahme für das Smartphone aufweist, wobei die Halterung einen ersten Verriegelungsmechanismus aufweist, mit dem das Smartphone in der Aufnahme verriegelbar ist, und wobei die Halterung einen Auslöser zum Entriegeln eines zweiten Verriegelungsmechanismus aufweist, mit dem die Halterung an einem Einkaufswagen verriegelbar ist. Darüber hinaus betrifft die Erfindung ein System zum Befestigung eines Smartphones an einem Einkaufswagengriff, eine Basis-Station zur Aufnahme einer Vielzahl von Halterungen und ein Verfahren zur Befestigung eines Smartphones an einem Einkaufswagengriff.

Aus der US 2006/0219780 A1 ist ein interaktives Einkaufs- und Vermarktungssystem für Verbraucher bekannt. Das System umfasst ein tragbares Datenendgerät zum Übertragen von Informationen über ein Kommunikationsnetz, welches innerhalb einer Einkaufseinrichtung oder bei einem Benutzer zu Hause verwendet werden kann.

Das US 6,725,206 B1 zeigt einen kassiererloser Einkaufsladen mit einer Vielzahl von Einkaufswagen, in die ausgewählte zu kaufende Gegenstände von Käufern abgelegt werden. Jeder der Einkaufswagen umfasst einen Gewichtsdetektor zum Messen des Gewichts der darin platzierten Gegenstände und einen Sender zum Übertragen der gemessenen Gewichte über eine drahtlose Kommunikationsverbindung. Ein Einkaufsterminal vergleicht das gemessene Gesamtgewicht mit der Summe der gelesenen Artikelgewichtsdaten, um zu bestimmen, ob die Gewichtungen korrelieren.

Die US 2010/0072715 A1 zeigt einen Einkaufswagen mit einer am Griff besfestigtewn Basis für eine elektronische Anzeige.

Diese Anmeldung macht sich den in der nachveröffentlichten WO 2013/153204 dargelegte Offenbarungsgehalt zu Eigen. Sie stellt sich die Aufgabe, zu den dort beschriebenen Halterungen, den Schnittstellen und Befestigungsmittel, sowie der ebenfalls dort erläuterten Station zur Bereitstellung der Halterung vorteilhafte Ergänzungen, Vereinfachungen und/oder Alternativen vorzuschlagen, mit denen die Halterung, die Aufnahmestation für die Halterungen und das dort vorgestellte Bezahlsystem für den Groß- und Einzelhandel weiter verbessert werden können. Eine dieser Aufgaben wird gelöst durch ein Verfahren mit den Merkmalen des Anspruchs 1. Die Ansprüche 11 bis 15 betreffen die Basis-Station, in welcher die Halterungen zum Gebrauch bereitgestellt werden.

Ein wesentlicher Aspekt der Erfindung ist die an einem Einkaufswagen bzw. dessen Griff befestigbare und verriegelbare Halterung, mit der ein vom Kunden in ein Geschäft mitgebrachtes mobiles Telekommunikationsendgerät, ein so genanntes Smartphone, am Einkaufswagen befestigt werden kann. Das in die Halterung eingelegte Smartphone lässt sich dort ebenfalls verriegelt, so dass eine unberechtigte Entnahme des in der Halterung am Einkaufswagen eingesetzten Smartphones verhindert werden kann. Eine Verriegelung im Sinne dieser Anmeldung ist eine durch Formschluss hergestellte Blockade, die nicht durch eine Verformung des Riegels, sondern durch Entfernen des Riegels aus seiner Blockadestellung wieder gelöst wird.

Die für das Smartphone vorgesehene Halterung weist eine Aufnahme auf, in der das Smartphone verriegelt gehalten werden kann. Neben dem hierfür erforderlichen ersten Verriegelungssystem umfasst sie Elemente eines zweiten Verriegelungssystems, mit dem die Halterung sicher am Einkaufswagengriff befestigt werden kann. Um eine unberechtigte Entnahme des Smartphones aus der Halterung zu verhindern, wird vorgeschlagen, das Entriegeln des ersten Verriegelungsmechanismus nur nach einer Berechtigungsüberprüfung zu ermöglichen.

Im Weiteren werden einzelne Merkmale der Erfindung näher erläutert.

Aufgrund der verschiedenen Größen von Smartphones ist es von Vorteil, wenn die Aufnahme dafür geeignet ist, Smartphone-Typen unterschiedlicher Größe aufnehmen zu können. In einer bevorzugten Ausführungsform bildet die Aufnahme hierfür einen Rahmen aus, der eine nach innen vorspringende Auflagefläche für die Seitenbereiche des Smartphones aufweist. Dies ermöglicht eine gewisse Breitentoleranz bei der Aufnahme von Smartphones. Dabei ist lediglich darauf zu achten, dass die auf der Rückseite des Smartphones sitzende Kamera nicht von der vorspringenden Auflagefläche verdeckt wird.

Von Vorteil ist es auch, wenn der Aufnahmeraum eine größere Länge als die hierfür vorgesehenen Smartphones hat. Dann ist es möglich, das in die Aufnahme eingesetzte Smartphone mit einem entlang der Längsausrichtung der Aufnahme beweglichen Schlitten zu bewegen. Hierbei wird das Smartphone gegen eine der Querseiten des Rahmens geführt und dort gehalten. Damit können Smartphones unterschiedlicher Länge in der Aufnahme aufgenommen und befestigt werden. Ist der Schlitten verriegelbar, wird zudem kein separates Verriegelungssystem für das Smartphone mehr benötigt. Um den Halt des Smartphones in der Aufnahme weiter zu verbessern, können der Schlitten und/oder die Querseite des Rahmens, gegen die das Smartphone vom Schlitten geführt wird, an einer der Auflagefläche entgegen gesetzten Seite Hinterschneidungen aufweisen, in welche die Enden des Smartphones eingreifen. Dies ermöglicht einen noch besseren Schutz gegen unberechtigte Entnahme.

Vorteilhaft ist es auch, wenn zumindest die für das Smartphone vorgesehene Auflagefläche des Schlittens nach oben gekippt werden kann. Dann kann das in die Aufnahme einzusetzende Smartphone leichter auf den Schlitten aufgelegt werden. An dem Schlitten ist ein elektronisches kabelgebundenes Interface für das Smartphone vorgesehen, das mit dem Smartphone verbunden werden kann. Vorzugsweise handelt es sich um eine standardisierte Schnittstelle in Form eines Micro-USB Anschlusses. Somit erleichtert das Kippen des Schlittens auch das Verbinden des Smartphones mit dem Interface, respektive der Schnittstelle, das üblicherweise durch ein Einsetzen des Smartphones auf diese Schnittstelle erfolgt.

Es hat sich herausgestellt, dass einige der in der WO2013/153204 dargelegten Schnittstellenfunktionen nicht zwingend erforderlich sind. Die die dort beschriebene erste Schnittstelle zur Übertragung von Daten vom mobilen Telekommunikations-Endgerät an die Halterung und die zweite Schnittstelle zur Übertragung von Daten von der Halterung an ein Kassensystem sind, wie bereits die dort beschriebene dritte und vierte Schnittstelle zur Übertragung von Energie und deren dazugehörige Merkmale, wie beispielsweise die Induktionsaufladung des Smartphones, nunmehr lediglich als optional anzusehen.

Bei einem Zurückkippen des Schlittens in die Ausgangsposition legt sich das mit der Schnittstelle verbundene Smartphone auf die seitlich am Rahmen vorspringende Auflagefläche und kann anschließend gegen die dem Schlitten gegenüberliegende Kehrseite des Rahmens und dort unter die gegebenenfalls vorhandene Hinterschneidung geführt werden.

Von besonderem Vorteil ist es, wenn das Schieben des Schlittens gegen eine Federkraft erfolgt. Diese Federbelastung kann dafür genutzt werden, Energie für einen Verriegelungsmechanismus bereitzustellen. Wie bereits dargestellt, ist aufgrund der unterschiedlichen Längen von Smartphones der zurückzulegende Weg des Halteschlittens bei jedem Smartphone-Typ unterschiedlich. Ist die jeweilige Endposition erreicht, wird das Smartphone mit einer definierten Vorspannung eingeklemmt bzw. gehalten. Bei Erreichen der definierten Vorspannung, wird der Verriegelungsmechanismus ausgelöst und der Schlitten blockiert. Die Verriegelung des Schlittens an einer beliebigen Stelle seines Weges erfolgt vorzugsweise mittels Eingriff in eine Verzahnung oder in der Aufnahme vorgesehene Öffnungen. Die Verriegelungselemente, zum Beispiel in Form von am Schlitten beweglich gehaltenen Stiften, werden dann mittels der vom Kunden ausgeübten Kraft mechanisch in die Verzahnung oder Öffnung eingeführt. Der hierbei entstehende Formschluss blockiert den Schlitten in der erreichten Endposition.

Da diese Kraft vom Kunden aufgebracht werden muss, ist es vorteilhaft, ihm das Auslösen der Verriegelung zu signalisieren. Der Kunde weiß dann sicher, dass sein Smartphone nun ordnungsgemäß verriegelt ist. Auf besonders einfache Weise kann dies mithilfe eines von einer LED ausgegebenen Leuchtsignals erfolgen. Diese LED sollte für den Kunden gut sichtbar an der Halterung angeordnet sein.

In einer alternativen Ausführungsform weist die Halterung statt des beweglichen Schlitten einen verstellbaren Haltebügel auf, der einen Teil des Aufnahmeraums umläuft und dort die Auflagefläche für das Smartphone begrenzt. Der Haltebügel ist beweglich und insbesondere federbelastet an der Halterung befestigt. Ein Verstellen des Haltebügels verändert die Länge des Aufnahmeraums und ermöglicht es damit, Smartphone verschiedener Größen in der Halterung aufnehmen zu können.

Von Vorteil ist es dabei, wenn der Haltebügel auf der dem Interface gegenüberliegenden Begrenzung des Aufnahmeraums ausgebildet ist. Dann ist die Schnittstelle an einem Teil der Halterung ausgebildet, der nicht oder nur wenig bewegt werden muss. Die Schnittstelle lässt sich in diesem Fall einfacher und ausfallsicherer anschließen.

Vorzugsweise bildet die Begrenzung des Aufnahmeraums, an der die Schnittstelle angeordnet ist, eine kippbare Auflagefläche für die das Smartphone umlaufende Kante aus. So kann die Auflagefläche zusammen mit der Schnittstelle nach oben gekippt werden. In Folge ist die Längsachse der Schnittstelle nicht mehr parallel zur Längsachse des Aufnahmeraums ausgerichtet, sondern hierzu angewinkelt. Schon ein leichtes Verschwenken der Schnittstelle, beispielsweise um ca. 30°, erleichtert das Verbinden des Smartphones mit der Schnittstelle. Das Smartphone kann dann zur Verbindung mit der Schnittstelle entlang der aus dem Aufnahmeraum herausragenden Längsachse der Schnittstelle und damit schräg von oben aufgesetzt werden, bis seine Kante auf der Auflagefläche zur Anlage kommt. In einem darauf folgenden Schritt wird das auf die Schnittstelle aufgesetzte Smartphone zusammen mit der Auflagefläche in den Aufnahmeraum verschwenkt. Es muss somit nicht erst in den Aufnahmeraum eingesetzt werden, um eine Verbindung mit der Schnittstelle herstellen zu können.

Von besonderem Vorteil ist es dabei, wenn die kippbare Auflagefläche eine Ruheposition einnimmt, in der sie für die Aufnahme eines Smartphones nach oben verschwenkt bereitgehalten wird. Besonders einfach ist dies zu erreichen, indem die Auflagefläche für das Smartphone in ihrer Ruheposition an einem hierfür ausgebildeten Anschlag federbelastet anliegt. Die Federbelastung muss lediglich dafür ausgelegt sein, die Schnittstelle in diese Ruheposition zu bringen und dort zu halten, bis sie mit einem Smartphone verbunden ist. Hierdurch wird das anschließende Verschwenken des mit der Schnittstelle verbundenen Smartphones nicht erschwert.

Im eingefahrenen Zustand ist der Haltebügel vorzugsweise derart nahe an der Halterung angeordnet, das ein mit seiner Kante an der Auflagefläche anliegendes Smartphone nicht in die Aufnahme eingesetzt werden kann, sondern mit seiner Rückseite auf dem Haltebügel zu liegen kommt. So wird ein Smartphone sicher aufgefangen, falls es einer Person beim Einsetzen in die Aufnahme aus der Hand gleitet. Dabei spielt die Größe eines Smartphones keine Rolle. Ein Smartphone kann in einem mittigen Bereich seiner Rückseite oder mehr zum Rand hin auf dem Haltebügel aufliegen, so das Smartphone unterschiedlicher Größe sicher abgefangen werden können.

Zur Befestigung des Smartphones in der Halterung ist es lediglich erforderlich, den Haltebügel so weit herauszuziehen, dass ein Anlegen des Smartphones auf die Auflagefläche möglich ist. Danach wird der Haltebügel insbesondere federbelastet gegen das auf der Auflagefläche liegende Smartphone geführt und hält es in der Aufnahme fest.

Wird der Haltebügel so weit aus der Halterung herausgezogen, dass ein Einsetzen des Smartphones in die Aufnahme möglich wird, verhindert eine an der Unterseite des Haltebügels angeordnete oder von diesem selbst ausgebildete, in die Aufnahme hineinragende Zunge ein Durchfallen des Smartphones. Von Vorteil ist es, wenn die Zunge derart positioniert ist, dass ein auf ihr zur Anlage gekommenes Smartphone zumindest im Wesentlichen parallel zur Längsachse der Aufnahme angeordnet ist. Auf diese Weise wird sichergestellt, dass es mit seiner umlaufende Kante beim Zurückstellen des Haltebügel an diesem zur Anlage kommt. Ein auf der Zunge aufliegendes Smartphone nimmt dann stets die richtige Position relativ zum Haltebügel ein. Der die Halterung nutzende Kunde muss das Smartphone somit nicht selber in der Aufnahme justieren, sondern kann die Zunge als Positionierungshilfe nutzen.

Obwohl solche Halterungen die beschriebene Größentoleranz und damit eine Eignung für verschiedene Smartphone-Typen aufweisen, können sie nicht sämtliche Größen von verfügbaren Smartphones abdecken. Zudem unterscheiden sich die Smartphone-Typen auch noch in der Position ihrer Schnittstelle am Gehäuse. Um das System für möglichst viele Smartphone-Typen nutzbar zu machen, ist es erforderlich, verschiedene Halterungs-Typen vorzuhalten. Damit ergibt sich das Problem, dem Kunden aus den verfügbaren Halterungen die für sein Smartphone Geeignete zu identifizieren und bereitzustellen. Besonders geeignete Identifikationsmerkmale sind dabei vom Kunden mitgeführte Kundenkarten oder dergleichen, die mit einer Information über das vom Kunden genutzte Smartphone verknüpft sind. Diese Verknüpfung kann in der Karte selbst abgespeichert sein oder in einem außerhalb der Karte vorgehaltenen Datensatz erfolgen, der bei Auslesen der Kundekarte abgefragt wird.

Als Alternative zu einer Kundenkarte lassen sich andere vom Kunden mitgeführte Karten nutzen, wenn sie den Kunden zugeordnet werden können. Die Zuordnung erfolgt, indem der Kunde Daten einer von ihm mitgeführte Karte, beispielsweise eine seiner Kreditkarten, als Identifikationsmerkmale hinterlegt. Besonders einfach ist dies schon bei der Registrierung des Kunden möglich.

Dabei ist es nicht zwingend erforderlich, dass die Karten physikalisch existieren. Mittlerweile sind Apps verfügbar, beispielsweise die App "Passbook" für das iPhone, mit denen Kunden-und/oder Kreditkartendaten in elektronischer Form auf dem Smartphone gespeichert und wieder ausgelesen werden können.

Von besonderem Vorteil ist es, wenn die Ausgabe der Halterungen automatisch erfolgen kann. Hierfür wird die Halterung in einer sogenannten Basis-Station bereitgestellt, in der sie gegen unberechtigte Entnahme gesichert sind. Bei einer besonders einfachen Art der Sicherung besteht der Verriegelungsmechanismus aus einem Nut-Feder-System, in welchem die aufgesetzte Halterung gegen Entnahme gesichert wird. Beispielsweise weist die Halterung seitlich und/oder rückwärtig angeordnete Nuten auf, welche auf damit korrespondierende Stege an der Station aufgeschoben werden. In einer Endposition der Halterung an ihrem Platz in der Station liegt einer Vertiefung oder Öffnung der Halterung ein in einer Wand der Station angeordneter federbelasteter Bolzen oder Stift gegenüber. Durch die Federbelastung greift der Bolzen oder Stift in die ihm gegenüberliegende Vertiefung oder Öffnung ein und blockiert so mittels Formschluss ein Abziehen der Halterung vom Nut-Feder-System.

Nach einer Identifikation des Kunden, beispielsweise durch Einführen seiner Kundenkarte in ein an der Station vorgehaltenes Lesegerät, wird überprüft, ob und wenn ja, welcher Smartphone-Typ mit dieser Karte verknüpft ist. Verläuft diese Kontrolle positiv, wird anschließend überprüft, ob eine für diesen Smartphone-Typ geeignete Halterung in der Station verfügbar ist. Sind entsprechende Halterungen verfügbar, wird eine dieser geeigneten Halterungen dem Kunden zugeordnet und zur Verfügung gestellt. Dies erfolgt durch die Entriegelung der Sicherung.

Wird ein Identifizieren des Kunden mittels einer Smartphone-App angeboten, müssen natürlich an der Station entsprechende Mittel zum Einlesen der Daten aus dem Smartphone vorgehalten werden.

In einer bevorzugten Ausführungsform erfolgt die Identifikation des Kunden am Smartphone über bekannte Mittel der Nahfeld-Kommunikation. Hierbei ist es insbesondere möglich auch ohne vorherige Registrierung des Kunden den Smartphone-Typ zu übermitteln und eine hierfür geeignete Halterung auszuwählen.

Alternativ oder ergänzend hierzu erfolgt die Identifikation anhand von biometrischer Merkmale des Kunden, beispielsweise seines Fingerabdrucks oder der Retina. Die zur Identifikation herangezogenen Merkmale werden vorzugsweise in der Halterung und/oder der Basis-Station gespeichert, um im weiteren Verfahren erneut abgefragt werden zu können. Ebenfalls ist es möglich, einen Code zu nutzen, der zum Entriegeln der Halterung und/oder des Smartphones am Smartphone eingegeben werden muss und über die Schnittstelle oder Nahfeld-Kommunikation übermittelt wird. Dieser Code kann vorgegeben an das Smartphone übermittelt werden oder beim Verriegeln des Smartphones vom Kunden am Smartphone eingegeben werden.

Bei einer besonders bevorzugten Art der Bereitstellung wird geprüft, ob mehrere geeignete Halterungen zur Verfügung stehen, und wenn ja, welche davon den höchsten Ladestand ihres Energiespeichers aufweist. So kann dem Kunden immer die Halterung mit den größten Energiereserven zur Verfügung gestellt werden. Neben der reinen Ladefunktion muss die Basis-Station in diesem Fall auch noch Sensoren zur Messung eines Füllstands des Energiespeichers in der Halterung aufweisen.

Eine einfache Art, die Verriegelung zu lösen, besteht im Zurückschieben des federbelasteten Bolzens in Richtung Wand der Basis-Station. Dies kann elektromagnetisch erfolgen, beispielsweise durch einen mit dem Bolzen verbundenen Hubmagneten, der nach positiver Berechtigungsprüfung geschaltet wird. Greift der Bolzen nicht mehr in die Öffnung ein, kann die Halterung ohne Schwierigkeiten entnommen werden. In einer hierzu alternativen Ausführungsform ist die Öffnung oder Vertiefung in der Wand der Basis-Station und der federbelastete Bolzen in der Halterung angeordnet.

Vorteilhafterweise wird dem Kunden signalisiert, welche der Halterungen für ihn bereitgestellt wurde. Auch hier erfolgt die Ausgabe des Signals vorzugsweise per LED, deren Leuchtsignal den Platz der bereitgestellten Halterung oder die Halterung selbst kennzeichnet. In einer besonders bevorzugten Ausführungsform wird das Signal durch das Zurückschieben des Bolzens ausgelöst.

Es kann jedoch vorkommen, dass der Kunde die für ihn bereitgestellter Halterung nicht entnimmt. Nachdem der Kunde sich identifiziert hat, kann er es sich beispielsweise anders überlegt haben oder anderweitig abgelenkt worden sein. Vorzugsweise wird in solchen Fällen die Halterung nach Ablauf einer vorgegebenen Zeit wieder verriegelt und gegebenenfalls das optionale Signal abgeschaltet. Damit wird auch verhindert, dass ein nachfolgender Kunde aus Versehen eine für ihn nicht geeignete Halterung entnimmt.

Entsprechend ist es von Vorteil, die Identifikation eines nachfolgenden Kunden erst dann anzunehmen, wenn der vorherige Kunde seine Halterung aus der Station entnommen hat oder die nicht entnommene Halterung nach Zeitablauf wieder verriegelt wurde. Diese Maßnahme kann dem Kunden auch durch optische oder akustische Signale angezeigt werden. So wird er informiert, dass er warten muss.

Hat der Kunde eine Halterung entnommen, kann er entweder zuerst das Smartphone in die Halterung einsetzen oder die Halterung zuvor am Schiebegriff des Einkaufswagens befestigen. Hierzu ist am Schiebegriff eine Aufnahme vorgesehen, in welche die Halterung aufgenommen und dort verriegelt gehalten werden kann. Von besonderem Vorteil ist es, wenn das Nut-Feder-System zur Befestigung der Halterung am Einkaufswagengriff dem Nut-Feder-System zur Befestigung der Halterung in der Station entspricht. Ist dies der Fall, können für die Befestigung der Halterung in der Station genutzten Elemente des Nut-Feder-Systems auch für die Befestigung der Halterung an dem Schiebegriff verwendet werden.

Analog hierzu kann die Verriegelung ebenfalls vereinheitlicht erfolgen. In einer besonders bevorzugten Ausführungsform erfolgt die Verriegelung ebenfalls mittels einer federnden Rastung, über einen oder mehrere am Einkaufswagengriff vorgesehenen federbelasteten Bolzen oder Stifte. Der Bolzen in der Auflagefläche der Aufnahme angeordnet und gleitet unter Druckeinwirkung in die Auflagefläche zurück. In der Endposition der Halterung am Schiebegriff liegt er gegenüber der Vertiefung oder Öffnung in der Halterung und kann in sie eingreifen. In dieser Ausführungsform werden nicht nur die für die Befestigung der Halterung in der Station, sondern auch für deren Verriegelung genutzte Elemente erneut genutzt. Der in der Öffnung oder Vertiefung sitzende Bolzen blockiert durch den Formschluss ein Abziehen der Halterung aus dem Nut-Feder-System der Befestigung der Halterung am Schiebegriff.

Um die Verriegelung lösen zu können, ist es wieder erforderlich, den federbelasteten Bolzen aus der Öffnung oder Vertiefung zurück zu schieben. Dies erfolgt vorteilhafterweise mittels eines Schalters oder Tasters, der an der Halterung vorgesehen ist. Wird dieser niedergedrückt, schiebt er den oder die Bolzen aus der Vertiefung bzw. Öffnung heraus. Damit löst er die Blockade der Halterung und ermöglicht so deren Entnahme aus dem Nut-Feder-System.

Natürlich ist es auch möglich, zwei voneinander unabhängige federnde Rastungen für die Verriegelung der Halterung in der Station bzw. am Einkaufswagengriff an unterschiedlichen Positionen vorzusehen. Diese können als die soeben beschriebene oder die weiter oben bereits erwähnte, dazu alternative Ausführungsform ausgestaltet sein. Je nach Ausführungsform müssen der Schalter bzw. Taste entsprechend ausgebildet sein, beispielsweise wenn das Lösen der Blockade ein Herausziehen des federbelasteten Bolzens zurück in die Halterung erfordert.

Ein wichtiger Gedanke dieser Erfindung ist es, eine unberechtigte Entriegelung der Halterung vom Einkaufswagengriff bei eingesetztem Smartphone zu verhindern. Eine besonders einfache Lösung hierfür ist das Verdecken des Tasters oder Schalters durch das in der Aufnahme liegende und verriegelte Smartphone. Am einfachsten erfolgt dies, indem der Taster oder Schalter unterhalb des in der Aufnahme liegenden Smartphones angeordnet ist. Auf diese Weise ist es zwingend erforderlich, zuerst die Verriegelung des Smartphones zu lösen, um das Smartphone entnehmen zu können und so den Taster oder Schalter zum Entriegeln der Halterung freizulegen und bedienen zu können.

Um eine unerwünschte Entnahme des Smartphones aus der Halterung zu verhindern, erfolgt das Lösen der Verriegelung vorzugsweise nur gegen eine Berechtigungsprüfung. Besonders einfach ist es, wenn zur Prüfung der Berechtigung die gleiche Methode wie bei der Auswahl der in der Station bereitgestellten Halterung herangezogen wird. Verfügt die Halterung über ein Kartenlesegerät, kann auch diese Berechtigungsprüfung mittels der Kundenkarte oder dergleichen ausgeführt werden.

Weist die Halterung ein Kartenlesegerät auf, in das die Karte eingeschoben wird, ermöglicht es eine vorteilhafte Ausführungsform, die Karte auch hier als Berechtigungsnachweis einzusetzen. Hierzu wird das Einführen der Karte in den Kartenschlitz genutzt, um den Verriegelungsmechanismus zu lösen. Dabei wird in einem ersten Schritt der Einschub der Karte nur soweit ermöglicht, bis ein im Lesegerät angeordneter Transponder die Gültigkeit der Karte überprüfen kann. Verlief die Überprüfung positiv, wird die weitere Blockade des Leseschlitzes aufgehoben und die Karte lässt sich ganz einschieben. Durch das nun mögliche vollständige Einschieben der Karte in den Kartenschlitz wird der Verriegelungsmechanismus mechanisch gelöst. Die Freigabe des Leseschlitzes kann durch einen oder mehrere elektromagnetisch bewegbare Magneten erfolgen, welcher bei positiver Prüfung den Leseschlitz und/oder die Verriegelung freigeben. Nach erfolgter Freigabe kann die Karte wieder aus dem Leseschlitz entnommen werden.

Alternativ dazu kann die Kundenkarte eine spezifische Stanzung oder Lochung aufweisen, in welche ein im Lesegerät angeordneter Stift nur dann eingreifen kann, wenn die Karte vollständig in den Kartenschlitz eingeschoben werden konnte. Ist dies der Fall, wird der Verriegelungsmechanismus freigegeben und das Smartphone kann entnommen werden. Vorzugsweise wird hierzu derselbe Stift genutzt, der zuvor den Leseschlitz blockiert hat.

Wenn andere Karten als die Kundenkarte zur Identifikation genutzt werden können, ist die beschriebene Freigabe des Verriegelungsmechanismus durch Eingriff in eine in der Karte vorhandene Stanzung oder Lochung meist nicht möglich. In diesem Fall weist der Kartenschlitz einen Schlitten auf, der über die spezifische Stanzung oder Lochung verfügt. Die Karte wird in den Schlitten eingesteckt und dann mit dem Schlitten in den Kartenschlitz eingeschoben. Vollständig eingeschoben, kann der im Lesegerät angeordneter Stift in den Schlitten eingreifen. Auf diese Art wird eine Beschädigung der Karte vermieden. Zum Lösen der Blockade im Leseschlitz werden in diesem Fall mithilfe eines dem Kartenschlitz zugeordneten Lesegeräts registrierte Daten der Karte ausgelesen. Dabei kann es sich um ein optisches Lesegerät, welches bestimmte Ziffernfolgen auf der Karte ausliest, einen Magnetstreifenleser, und/oder ein Lesegerät für den auf der Karte gegebenenfalls enthaltenen Chip handeln.

Alternativ hierzu kann die Halterung einen der Halterung zugeordneten und dort in einer Aufnahme gehaltenen Chip umfassen, der ein Identifikationsmerkmal, beispielsweise einen Transponder aufweist. Der Chip wird von der Halterung freigegeben, wenn das Smartphone in der Halterung verriegelt ist. Nach Entfernen des Chips ist eine Entriegelung nicht mehr möglich. Wird der Chip wieder in seine Aufnahme an der Halterung eingesteckt, wird sein Identifikationsmerkmal auf seine Zuordnung zu dieser Halterung geprüft und bei positivem Prüfungsergebnis die Verriegelung freigegeben.

Der Schlitten ist nun frei beweglich. Wurde das Smartphone unter eine Hinterschneidungen geführt muss der Schlitten vor der Entnahme des Smartphones bewegt werden, bevor das Smartphone entnommen werden kann. Ein Kippen des Schlittens ermöglicht eine komfortable Entnahme des Smartphones bzw. ein leichtes Lösen des Smartphones von der Schnittstelle am Schlitten.

In einer bevorzugten Ausführungsform ist der Schlitten nur freigegeben, wenn der Berechtigungsnachweis, beispielsweise die Kundenkarte, in der Halterung steckt. Vorzugsweise wird er in der Halterung arretiert, bis eine Verriegelung des ersten Verriegelungsmechanismuss erfolgt ist. Dies hat den Vorteil, dass der Kunde eine Bestätigung der ordnungsgemäßen Verriegelung erhält.

Die hier zum Schlitten ausgeführten Merkmale lassen sich entsprechend mit der hierzu alternativen Ausführungsform der Aufnahme für das Smartphone mit Haltebügel umsetzen. Ebenso gilt dies für das Verkippen der Schnittstelle und die zum Ver- bzw. Entriegelungsvorgang beschriebenen Möglichkeiten sowie ihre jeweiligen Vorteile. Insofern gilt das Vorgesagt entsprechend.

Ist das Smartphone aus der Halterung entnommen, ist der Taster oder Schalter zum Entriegeln der Halterung am Einkaufswagengriff frei zugänglich und kann betätigt werden. Abschließend kann die vom Einkaufswagen gelöste Halterung wieder die Basisstation gestellt oder an einer Abgabestation zurückgegeben werden. Dabei ist es vorteilhaft, wenn die Rückgabe der Halterung durch geeignete Maßnahmen erzwungen wird.

Vorteilhafterweise wird ein erneutes Einsetzen der Halterung in den Einkaufswagengriff verhindert. Hierdurch kann verhindert werden, dass eine andere Person als der Kunde, welcher die Halterung an der Basis-Station zugeordnet bekommen hat, die Halterung weiter nutzt. Vorzugsweise wird diese Blockade automatisch durch das Einstellen der Halterung an einem Platz in der Basis-Station gelöst.

Vorteilhafterweise wird auch verhindert, dass in eine einem Kunden zugeordnete Halterung ein fremdes Smartphone verriegelt werden kann. Dies ist möglich, wenn ein Kunde sein Smartphone aus der Halterung entfernt hat, ohne die Halterung zurückzugeben. Hierzu ist es erforderlich, nicht nur den Kunden und seinen Smartphone-Typ zu registrieren, sondern zusätzlich ein individuelles Identifikationsmerkmal für das Smartphone selbst. Ein Verriegeln ist dann nur möglich, wenn das Identifikationsmerkmal von der Halterung geprüft und akzeptiert wurde.

Von Vorteil ist es, wenn das Bezahlen mit dem Smartphone an der Bezahlstation mit der Rückgabe der Halterung verknüpft ist. Hierzu wird der Bezahlvorgang erst dann ermöglicht, wenn die Halterung an bestimmter Stelle abgelegt wurde. Vorzugsweise weißt die Halterung ein auslesbares Identifikationsmerkmal auf, so dass die Rückgabe der Halterung automatisch registriert werden kann. Besonders eignen sich hierfür ein Transponder oder ein an der Halterung angebrachter Barcode. Eine Freigabe des Bezahlvorgangs kann auf einfache Weise durch aktiv-Schalten des Bildschirms der Bezahlstation erfolgen. Alternativ hierzu wird der Kunde durch entsprechende Signale darauf hingewiesen, dass er die Halterung erst noch zurückgeben muss.

Das Identifikationsmerkmal der Halterung wird vorteilhafterweise auch dafür genutzt, den Typ der in der Basis-Station stehenden Halterung zu identifizieren. Damit ist es möglich, eine Halterung einfach an einem beliebigen Platz in der Basis-Station zurückzustellen.

In einer bevorzugten Ausführungsform ist die bestimmte Stelle, an der die Halterung abgelegt werden muss, um den Bezahlvorgang starten zu können, eine Basis-Station oder eine Rückgabestation. Bei einer Rückgabe in einer Basis-Station wird es möglich, ohne weiteren Personalbedarf die Basis-Station mit Halterungen zu füllen. Die von den Kunden selbst gefüllte Basis-Station muss dann nur noch an geeigneter Stelle im Geschäft für die erneute Entnahme der Halterungen bereitgestellt werden. Eine besonders einfache Lösung hierfür ist ein Drehmechanismus, mit welchem eine beidseitig mit Halterungen zu bestücken Basis-Station um 180° gedreht werden kann, so dass die aufgefüllten Halterungen an der Gegenseite der Bezahlstation wieder entnommen werden können. Ein weiterer Vorteil der Rückgabe in eine Basis-Station oder eine entsprechend ausgerüstete Rückgabestation ist, dass die zurückgegebenen Halterungen auf Ladestationen aufgestellt werden, so das Ihr Energiespeicher ohne Verzögerung wieder aufgeladen werden kann.

Von Vorteil ist es auch, wenn die Nutzung der Halterung die Abgabe eines Pfandes erfordert, dass bei Rückgabe der Halterung wieder zurückgegeben wird.

In einer zur Halterung gemäß Anspruch 1 alternativen Lösung der gestellten Aufgabe wird kein Auslöser von einem in der Aufnahme gehaltenen Smartphone verdeckt. Auch in der im Folgenden näher beschriebenen alternativen Ausführungsform erfolgt eine Berechtigungsprüfung und der den ersten Verriegelungsmechanismus lösende Auslöser ist an der Halterung frei zugänglich. Die erfindungsgemäße Berechtigungsprüfung erfolgt mittels eines Tokens, der einer bestimmten Halterung zugeordnet ist. Der Token ist in die Halterung eingesteckt und wird zusammen mit ihr aus der Basis-Station entnommen. Ein solcher Token kann eine bestimmte Geometrie aufweisen, die von der Halterung geprüft wird. Bevorzugt weist er wie die zuvor beschriebene Kundenkarte einen Transponder auf, über den eine elektronische Berechtigungsprüfung in der Halterung erfolgt. Um diesen alternativen Mechanismus besser vom ersten Verriegelungsmechanismus unterscheiden zu können, wird er im Weiteren als Befestigungsmechanismus bezeichnet.

An dieser Ausführungsform ist besonders vorteilhaft, dass sie wesentlich flexibler auf gewünschte Varianten angepasst werden kann. So kann vorzugsweise der Befestigungsmechanismus und der zweite Verriegelungsmechanismuss gemeinsam in einem Arbeitsschritt verriegelt bzw. wieder gelöst werden. Dies erleichtert dem Kunden die Handhabung der Halterung, da die Halterung wie auch das in der Halterung befestigte Smartphone durch die Berechtigungsprüfung in einem gemeinsamen Arbeitsschritt gegen unberechtigte Entnahme geschützt.

Wird die alternative Ausführungsform der Halterung nicht an einem Einkaufswagen eingesetzt, kann sogar der hierfür vorgesehene zweite Verriegelungsmechanismus vollständig entfallen und die Halterung besonders einfach aufgebaut sein. Ist eine Befestigung der Halterung am Einkaufswagen gewünscht, deren Verriegelung aber nicht erforderlich, kann statt des zweiten Verriegelungsmechanismus ein sonstiges Verbindungsmittel, beispielsweise eine Nut-Feder-Verbindung in Form eines Schwalbenschwanzes eingesetzt werden. Insofern ist ein verriegelbares Verbindungsmittel ein zweiter Verriegelungsmechanismus im Sinne dieser Anmeldung, jedoch ohne das dessen Auslöser verdeckt wäre.

In einer besonders bevorzugten Ausführungsform weist die Halterung keinen Auslöser für den Befestigungsmechanismus, sondern stattdessen einen Schalter oder Schieber auf, dessen Bewegung in die eine Richtung den Befestigungsmechanismus verriegelt, während die Bewegung in die entgegengesetzte Richtung den Befestigungsmechanismus wieder löst. Ein solcher Schieber oder Schalter hat den Vorteil, dass die erforderliche Bewegung vom Mechanismus nicht nur zum Entriegeln, sondern auch zum Verriegeln genutzt werden kann. Zudem kann die für das Verriegeln erforderliche Bewegung zusätzlich dazu genutzt werden, dass Smartphone in seiner Aufnahme zu verspannen.

Bewegt der Kunde einen solchen Schieber oder Schalter von der Position "Offen" auf "Geschlossen", werden vor der Freigabe des Tokens vorzugsweise ein oder mehrere Zustände überprüft. Eine bevorzugte Überprüfung ist dabei, ob die Halterung am Einkaufswagen, beispielsweise an dessem Griff, ordnungsgemäß befestigt ist. Diese Position kann mittels eines Endschalters überprüft werden, der signalisiert, dass die Halterung die gewünschte Endposition am Einkaufswagen erreicht hat. Um ein ungewünschtes Lösen zu verhindern, ist die Halterung in der Endposition vorzugsweise verrastet.

Eine andere bevorzugte Überprüfung ist, ob ein Smartphone ordnungsgemäß in der Halterung befestigt ist. Auch diese Überprüfung kann mittels eines entsprechenden Endschalters erfolgen. Ebenso ist es von Vorteil zu überprüfen, ob ein Token in die Halterung eingesteckt ist, der ausgelesen werden kann. Vorzugsweise erfolgt auch diese Überprüfung mittels eines Endschalters, der von einem vollständig eingeschobenen Token ausgelöst wird.

Nach der Verriegelung des Smartphones in der Halterung und, falls vorhanden, der Verriegelung der Halterung am Einkaufswagen kann der Token aus der Halterung entnommen werden. Wird dabei ein Token eingesetzt, der nicht dauerhaft dieser Halterung zugeordnet ist, muss vor der Entnahme des Token dessen ID ausgelesen und in der Halterung gespeichert werden. Vorzugsweise wird die ID des Tokens bei erfolgter positiver Berechtigungsprüfung direkt in einem Datenspeicher der Halterung gespeichert.

Für die Entnahme ist es vorteilhaft, wenn der Token nach dem Verriegeln des Smartphones mechanisch ein Stück aus der Halterung herausgedrückt wird. Dem Benutzer wird so signalisiert, dass die Verriegelung korrekt durchgeführt wurde, sein Smartphone gesichert ist und er den Token entnehmen kann. Hierzu ist der Befestigungsmechanismus der Art mit der Mechanik der Einschuböffnung verbunden dass eine Verriegelung des Befestigungsmechanismus einhergeht mit einer Freigabe des Token und einer Verkürzung der für den Token nutzbaren Tiefe der Einschuböffnung.

Ein Lösen der Verriegelung bzw. der Verriegelungen ist erst möglich, wenn ein passender Token wieder in die Einschuböffnung in der Halterung eingeführt worden ist und die Berechtigungsprüfung des Tokens positiv war. Ist dies der Fall, wird der Haltebügel und gegebenenfalls das die Halterung am Einkaufswagen verriegelnde Verbindungsmittel freigegeben und der Token in der Halterung gegen Entnahme gesichert.

Wie bereits erwähnt wird vor der Berechtigungsabfrage vorzugsweise überprüft, ob überhaupt ein Token in die Halterung eingeführt wurde. Hierzu kann auch der zuvor beschriebene Mechanismus zur Verkürzung der für den Token nutzbaren Tiefe der Einschuböffnung genutzt werden. Wird der Token ganz in die Einschuböffnung eingeschoben, kommt er am Mechanismus zur Anlage und drückt ihn wieder tiefer in die Einschuböffnung ein. Diese Bewegung signalisiert, dass ein Token in die Einschuböffnung eingesetzt wurde.

Vor dem Lösen der Verriegelung kann ebenfalls überprüft werden ob die Halterung am Einkaufswagen und/oder ein Smartphone in der Halterung befestigt ist. Hierzu können die zuvor genannten Endschalter eingesetzt werden. Verlaufen die durchgeführten Abfragen positiv, kann in der Ausführungsform mit Schalter oder Schieber dieser bevorzugt automatisch, aber auch manuell von "Geschlossen" auf "Offen" bewegt werden. In Folge wird die Verriegelung der Aufnahme gelöst und, falls vorhanden, die Verriegelung der Halterung am Einkaufswagen gelöst. Nun kann in einer beliebigen Reihenfolge die Halterung vom Einkaufswagen abgenommen sowie die Aufnahme für das Smartphone geöffnet und das Smartphone aus der Halterung entnommen werden.

Die in dieser Anmeldung als zu einander alternativ beschriebenen Ausführungsformen können alle sonstigen, für die jeweils andere Ausführungsform beschriebenen Merkmale aufweisen und von deren Vorteilen Gebrauch machen. Insofern sind die im jeweiligen Zusammenhang beschriebenen weiteren Merkmale bzw. Verfahrensschritte nicht nur für die jeweilige Ausführungsform, sondern auch für die alternative Ausführungsform verwendbar.

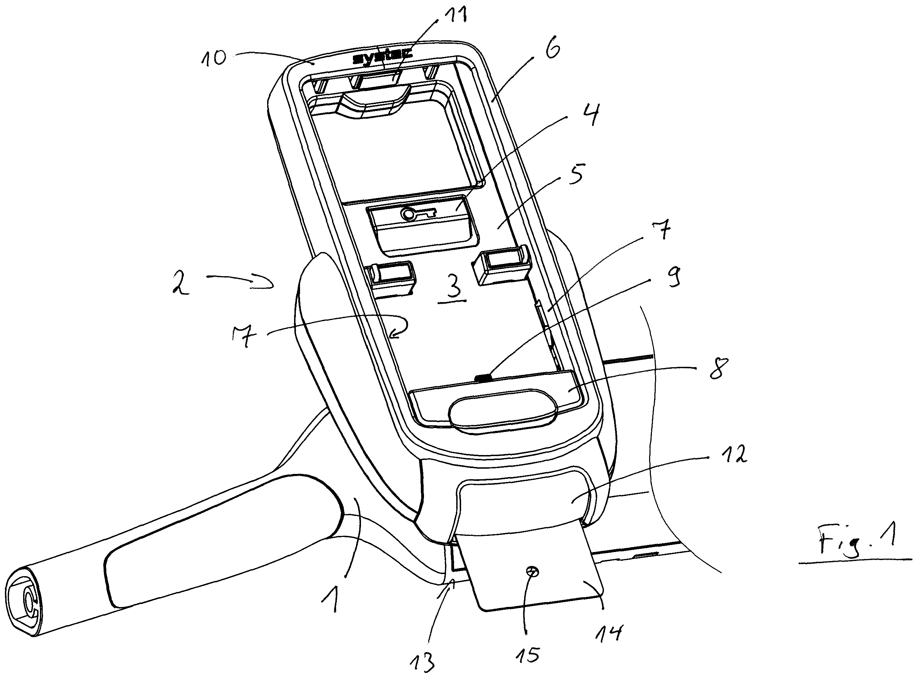

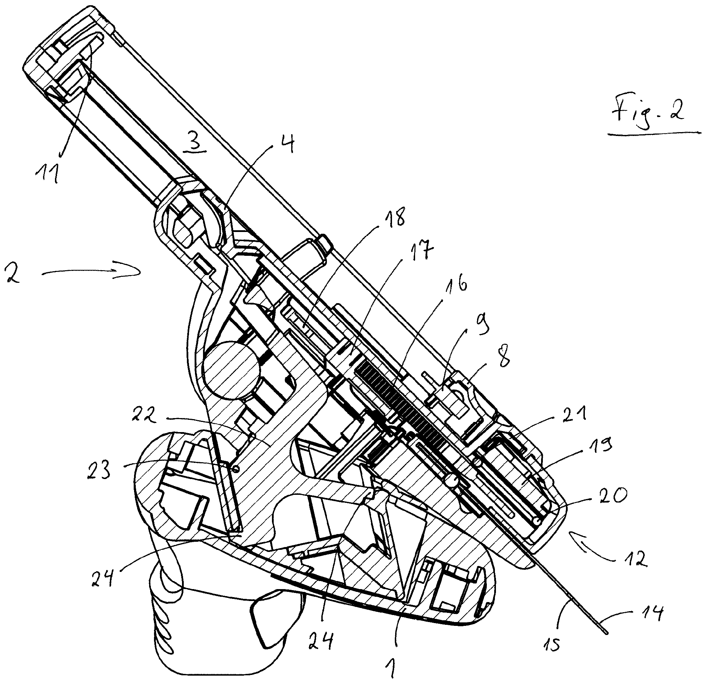

Eine bevorzugte Ausbildungsform der erfindungsgemäßen Halterung mit Verriegelungsmechanismus wird anhand zweier Figuren näher beschrieben. Dabei zeigt die Figur 1 eine perspektivische Darstellung einer in einen Einkaufswagengriff 1 eingesetzten Halterung 2 und die Figur 2 einen Schnitt entlang der Längsachse der Halterung 2 gemäß Figur1.

Die Halterung 2 umfasst eine Aufnahme 3 für ein Smartphone. Da kein Smartphone in der Aufnahme 3 gehalten wird, ist ein Auslöser 4 zum Entriegeln eines zweiten Verriegelungsmechanismus nicht verdeckt. Der Auslöser 4 weist die Form eines Tasters auf, der in einer Öffnung im Boden 5 der Aufnahme 3 angeordnet ist. Die Aufnahme weist eine Umrandung 6 auf, die am Boden 5 hervor steht. Zwischen den Innenkanten 7 der beiden Längsseiten der Umrandung wird ein federbelasteter Schlitten 8 geführt, der auf diese Weise in Längsrichtung verschieblich in der Aufnahme 3 gehalten wird. An einer der Aufnahme 3 zugewandten Kante des Schlittens 8 ist eine elektronische Schnittstelle 9 angeordnet. Die Innenseite der dem Schlitten 8 gegenüberliegenden Querseite 10 der Umrandung 6 weist einen Endschalter 11 auf, der die Anlage eines vom Schlitten 8 gegen die Querseite 10 gedrückten Smartphones detektiert. Die Halterung 3 umfasst des Weiteren ein Kartenlesegerät 12, in dessen Kartenschlitz 13 eine Karte 14 eingeführt ist. Die Karte 13 weist zwei entlang der Querachse der Karte gespiegelte Lochungen auf, von denen nur die Lochung 15 zu sehen ist.

In der mit Figur 2 gezeigten Schnittzeichnung weisen sämtliche geschnittenen Flächen die gleiche Schraffuren auf, unabhängig davon ob sie von einander getrennten Teilen zuzuordnen sind oder nicht. Der Schlitten 8 umfasst eine Art Zahnstange 16, die bei einer Bewegung des Schlittens 8 in Längsrichtung der Aufnahme 3 an einem Zahnrad 17 entlang geführt wird und dieses in Rotation versetzt. Eine Verriegelung des Schlittens erfolgt über ein zum Zahnrad 17 koaxial angeordnetes und mit ihm verbundenes Zahnrad 18, dessen Radius um ein Mehrfaches größer ist. Zur Blockade greift eine Mechanik in die Zähne des mit rotierenden Zahnrads 18 ein und verriegelt damit den Mechanismus.

Das Kartenlesegerät zwölf umfasst neben seiner Elektronik 19 eine RFID-Antenne 20, sowie ein Blockadeelement in Form eines Stiftes 21, der ein vollständiges Einführen der Kundenkarte 14 verhindern, bzw. bei eingeschobener Kundenkarte 14 in eine ihrer Öffnungen 15 eingreifen und eine Entnahme verhindern kann.

Ein Betätigen des Tasters 4 verschwenkt eine in der Halterung 2 befestigte federbelasteten Stift in Form einer Wippe 22 um ihre Achse 23. Die Wippe 22 weist zwei Hinterschneidungen 24 auf, die in einer Verriegelungsposition die Halterung 2 in dem Griff 1 des Einkaufswagens verriegeln Das Verschwenken löst die einander entgegengesetzten Hinterschneidungen 24 aus ihrer Verriegelungsposition und ermöglicht es, die Halterung 2 aus dem Griff 1 zu entnehmen.

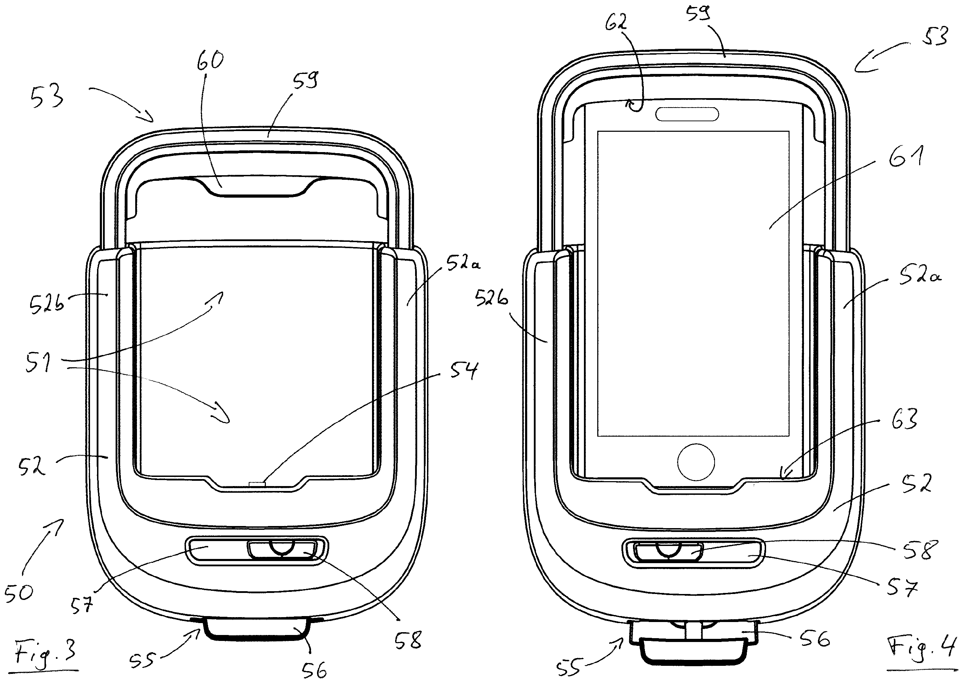

Eine bevorzugte Ausbildungsform der erfindungsgemäßen Halterung mit Befestigungsmechanismus wird ebenfalls anhand zweier Figuren näher erläutert. Dabei zeigt Figur 3 eine Aufsicht auf eine Halterung mit einem Haltebügel in Grundposition und Figur 4 eine Aufsicht auf die Halterung gemäß Figur 1 mit einem in die Aufnahme eingesetzten Smartphone.

Die in Figur 3 gezeigte Halterung 50 weist eine Aufnahme 51 für ein Smartphone auf. Die Aufnahme 51 umfasst einen feststehenden Teil 52 und einen beweglich an der Halterung 50 gelagerten Haltebügel 53. Der Haltebügel 53 greift in die längsseitigen Schenkel 52a, 52b des feststehenden Teils 52 ein und ist dort verschieblich gelagert. Das Eingreifen verhindert, dass der Befestigungsmechanismus frei zugänglich ist und manipuliert werden kann.

An einer vom fest stehenden Teil 52 ausgebildeten Querseite der Aufnahme 51 ist eine elektronische Schnittstelle 54 gängiger Norm angeordnet, an die ein Smartphone angeschlossen werden kann.

Die Halterung 50 weist eine Einschuböffnung 55 auf, in der ein Token 56 gehalten wird. In einer Nut 57 des feststehenden Teils 52 wird ein Schieber 58 beweglich gelagert. Der Schieber 58 in Figur 3 befindet sich in seiner zweiten Position, in welcher der Befestigungsmechanismus entriegeln ist. Somit ist der Mechanismus nicht blockiert und der U-förmige Haltebügel 53 lässt sich aus den Schenkeln 52a, 52b herausziehen, um ein Smartphone in die Aufnahme 51 einsetzen zu können.

In der von Figur 3 gezeigten Grundposition des Haltebügel 53 am feststehenden Teil 52 ist der Haltebügel 53 aufgrund seiner Federbelastung so weit in die Schenkel 52a, 52b eingeführt, dass ein auf die Schnittstelle 54 aufgesetztes Smartphone beim Verkippen in die Aufnahme 51 mit seiner Rückseite auf einer Oberkante 59 des Haltebügel 53 zur Anlage kommt. Wird nun der Haltebügel 53 gegen die Federbelastung aus den Schenkeln 52a, 52b herausgezogen, vergrößert sich die Aufnahme 51. Je nach Größe des einzusetzenden Smartphones ist die Aufnahme 51 irgendwann lang genug, so dass das Smartphone nicht mehr an der Oberkante 59 zur Anlage kommt, sondern vollständig in die Aufnahme 51 eingesetzt werden kann. In dem die Unterkante 60 des Haltebügel 53 im Vergleich zu Oberkante 59 weiter in die Aufnahme 51 vorsteht bzw. eine Zunge 60 ausgeformt, kommt das in die Aufnahme eingesetzte Smartphone hier zur Anlage. Wird nun der Haltebügel 53 losgelassen, wird er durch die Federbelastung gegen die obere Außenkante des Smartphones gedrückt.

Die Figur 4 zeigt ein solchermaßen in die Aufnahme 51 eingesetztes Smartphone 61. Das Smartphone 61 liegt auf der von ihm verdeckten Zunge 60 auf und liegt mit seiner oberen Außenkante 62 an der Innenseite des Bügels 53 an. Vorzugsweise erfolgt dieses Anliegen in Form einer Hinterschneidungen, so dass das Smartphone zwischen Zunge 60 und Oberkante 59 des Bügels 53 gehalten wird. Auch die Unterkante 63 des Smartphones hinterschneidet den feststehenden Teil 52 an der unteren Querseite der Aufnahme 51. ein unbefugtes Herausnehmen des Smartphones 61 wäre dann nur unter Zerstörung der Halterung 50 sowie einer höchst wahrscheinlichen Beschädigung des Smartphones 61 durchführbar.

In dieser Position des Smartphones 61 kann der Schieber 58 in die von Figur 4 gezeigte erste Position verschoben werden, in welcher der Haltebügel 53 verriegelt ist und nicht mehr bewegt werden kann. Ist die Verriegelung erfolgt, wird dies durch ein leichtes Herausschieben des Tokens 56 aus der Einschuböffnung 55 signalisiert. Der die Halterung benutzende Kunde weiß dann, dass sein Smartphone verriegelt ist und er den Token 56 entnehmen kann.

## Patentansprüche

1. Verfahren zur automatischen Bereitstellung einer Halterung in einer Basis-Station, in welcher sie gegen unberechtigte Entnahme gesichert ist, wobei nach der Identifikation eines Kunden geprüft wird, ob ein Smartphone-Typ mit einem zur Identifikation des Kunden genutzten Merkmal verknüpft ist und ob eine für diesen Smartphone-Typ geeignete Halterung in der Basis-Station verfügbar ist, wobei, wenn geeignete Halterungen verfügbar sind, eine dieser Halterungen dem Kunden zugeordnet und ihm zur Verfügung gestellt wird.

2. Verfahren nach Anspruch 1,
**dadurch gekennzeichnet,**
**dass** die Indentifikation des Kunden über Mittel der Nahfeld-Kommunikation erfolgt.

3. Verfahren nach Anspruch 1 oder 2,
**dadurch gekennzeichnet,**
**dass** der Kunde mit Hilfe einer vom Kunden mitgeführten Karte, insbesondere einer Kundenkarte, identifiziert wird.

4. Verfahren nach Anspruch 1 oder 2,
**dadurch gekennzeichnet,**
**dass** der Kunde mit Hilfe biometrischer Merkmale des Kunden, insbesondere seines Fingerabdrucks oder seiner Retina, identifiziert wird.

5. Verfahren nach Anspruch 1 oder 2,
**dadurch gekennzeichnet,**
**dass** zur Identifikation des Kunden ein Code genutz wird, der zur Entriegelung der Halterung und/oder des Smartphones am Smartphone eingegeben wird.

6. Verfahren nach einem der vorangegangenen Ansprüche,
**dadurch gekennzeichnet,**
**dass** bei der Bereitstellung geprüft wird, welche der Halterungen den höchsten Ladestand ihres Energiespeichers aufweist.

7. Verfahren nach einem der vorangegangenen Ansprüche,
**dadurch gekennzeichnet,**
**dass** dem Kunden signalisiert wird, welche der Halterungen für ihn bereitgestellt wurde.

8. Verfahren nach einem der vorangegangenen Ansprüche,
**dadurch gekennzeichnet,**
**dass** die Halterung in der Basis-Station nach Ablauf einer vorgegebenen Zeit wieder verriegelt wird.

9. Verfahren nach Anspruch 8,
**dadurch gekennzeichnet,**
**dass** die Identifikation eines nachfolgenden Kunden erst angenommen wird, wenn die nicht entnommene Halterung nach Zeitablauf wieder verriegelt wurde.

10. Verfahren nach einem der Ansprüche 1 bis 8,
**dadurch gekennzeichnet,**
**dass** die Identifikation eines nachfolgenden Kunden erst angenommen wird, wenn der vorherige Kunde seine Halterung aus der Basis-Station entnommen hat.

11. Verfahren nach einem der vorangegangenen Ansprüche,
**dadurch gekennzeichnet,**
**dass** die Rückgabe der Halterung in eine Basis-Station einen Bezahlvorgang startet.

12. Basis-Station zur Durchführung eines Verfahren nach einem der Ansprüche 1 bis 11,
**dadurch gekennzeichnet,**
**dass** die in der Basis-Station bereitgestellten Halterungen gegen unberechtigte Entnahme gesichert sind.

13. Basis-Station nach Anspruch 12,
**dadurch gekennzeichnet,**
**dass** die Basis-Station Mittel zum Auslesen eines Identifikationsmerkmales der Halterung aufweist, so dass die Rückgabe der Halterung automatisch registriert werden kann.

14. Basis-Station nach Anspruch 12 oder 13,
**dadurch gekennzeichnet,**
**dass** die Basis-Station Mittel zum Auslesen eines Identifikationsmerkmales der Halterung aufweist, so dass der Typ der in der Basis-Station stehenden Halterung identifizierbar ist.

15. Basis-Station nach einem der Ansprüche 12 bis 14,
**dadurch gekennzeichnet,**
**dass** die beidseitig mit Halterungen zu bestückende Basis-Station einen Drehmechanismus aufweist.

16. Basis-Station nach einem der Ansprüche 12 bis 15,
**dadurch gekennzeichnet,**
**dass** der Verriegelungsmechanismus aus einem Nut-Feder-System besteht, in welchem die aufgesetzte Halterung gegen Entnahme gesichert ist.

## Claims

1. A method for automatically providing a holding device in a base station in which said holding device is secured against unauthorised removal, wherein, after the identification of a customer, a check is carried out as to whether a smartphone type with a feature used to identify the customer is linked and whether a holding device suitable for said smartphone type is available in the base station, wherein, if suitable holding devices are available, one of said holding devices is assigned to and made available to the customer.

2. The method according to Claim 1,
**characterised in that**
the customer is identified using near-field communication means.

3. The method according to Claim 1 or 2,
**characterised in that**
the customer is identified with the aid of a card, in particular a customer card, carried by the customer.

4. The method according to Claim 1 or 2,
**characterised in that**
the customer is identified with the aid of biometric features of the customer, in particular a fingerprint or retina of the customer.

5. The method according to Claim 1 or 2,
**characterised in that**
a code which is entered into the smartphone to unlock the holding device and/or the smartphone is used to identify the customer.

6. The method according to any one of the preceding claims,
**characterised in that**
during provision, a check is carried out as to which of the holding devices has the stored energy source with the highest charge state.

7. The method according to any one of the preceding claims,
**characterised in that**
the holding device which has been provided for the customer is indicated to the customer.

8. The method according to any one of the preceding claims,
**characterised in that**
the holding device in the base station is locked again after a predefined time has elapsed.

9. The method according to claim 8,
**characterised in that**
the identification of a subsequent customer is accepted only when the holding device which was not removed has been locked again after the time has elapsed.

10. The method according to any one of Claims 1 to 8,
**characterised in that**
the identification of a subsequent customer is accepted only when the previous customer has removed his holding device from the base station.

11. The method according to any one of the preceding claims,
**characterised in that**
the return of the holding device to a base station starts a payment process.

12. A base station for carrying out a method according to any one of Claims 1 to 11,
**characterised in that**
the holding devices provided in the base station are secured against unauthorised removal.

13. The base station according to Claim 12,
**characterised in that**
the base station has means for reading an identification feature of the holding device so that the return of the holding device can be registered automatically.

14. The base station according to Claim 12 or 13,
**characterised in that**
the base station has means for reading an identification feature of the holding device so that the type of the holding device standing in the base station can be identified.

15. The base station according to any one of Claims 12 to 14,
**characterised in that**
the base station which is equipped with holding devices on both sides has a rotation mechanism.

16. The base station according to any one of Claims 12 to 15,
**characterised in that**
the locking mechanism consists of a tongue-and-groove system in which the holding device placed thereon is secured against removal.

## Revendications

1. Procédé de mise à disposition automatique d'un support dans un poste de base, dans lequel il est sécurisée envers tout enlèvement non autorisé, sachant qu'il est vérifié après indentification d'un client, si un type de téléphone intelligent est interconnecté à une caractéristique utilisée pour l'identification du client et si un support approprié pour ce type de téléphone intelligent est disponible sur le poste de base, sachant que, si des supports appropriés sont disponibles, un de ces supports est attribué au client et est mis à sa disposition.

2. Procédé selon la revendication 1,
**caractérisé en ce que**
l'identification du client a lieu par le biais de moyens de la communication en champ proche.

3. Procédé selon la revendication 1 ou 2,
**caractérisé en ce que**
le client est identifié à l'aide d'une carte portée par le client, en particulier d'une carte de client.

4. Procédé selon la revendication 1 ou 2,
**caractérisé en ce que**
le client est identifié à l'aide de caractéristiques biométriques du client, en particulier de son empreinte digitale ou de sa rétine.

5. Procédé selon la revendication 1 ou 2,
**caractérisé en ce que**
pour identifier le client on utilise un code, qui est introduit sur le téléphone intelligent pour déverrouiller le support et/ou le téléphone intelligent.

6. Procédé selon l'une quelconque des revendications précédentes,
**caractérisé en ce qu'**
à la mise à disposition, il est vérifié lequel des supports comporte le niveau de charge maximal de son accumulateur d'énergie.

7. Procédé selon l'une quelconque des revendications précédentes,
**caractérisé en ce qu'**
il est signalé au client, lequel des supports a été mis à disposition pour lui.

8. Procédé selon l'une quelconque des revendications précédentes,
**caractérisé en ce que**
le support est à nouveau verrouillé dans le poste de base une fois expiré la période prédéfinie.

9. Procédé selon la revendication 8,
**caractérisé en ce que**
l'identification d'un client suivant n'est acceptée que si le support non enlevé a été verrouillé à nouveau une fois le temps expiré.

10. Procédé selon l'une quelconque des revendications 1 à 8,
**caractérisé en ce que**
l'identification d'un client suivant n'est acceptée que si le client précédent a enlevé son support du poste de base.

11. Procédé selon l'une quelconque des revendications précédentes,
**caractérisé en ce que**
la remise du support dans un poste de base met en marche une opération de paiement.

12. Poste de base pour exécuter un procédé selon l'une quelconque des revendications 1 à 11, **caractérisé en ce que**
les supports mis à disposition dans le poste de base sont sécurisés contre tout enlèvement non autorisé.

13. Poste de base selon la revendication 12, **caractérisé en ce que**
le poste de base comporte des moyens pour lire une caractéristique d'identification du support de telle manière que la remise du support peut être enregistré automatiquement.

14. Poste de base selon la revendication 12 ou 13,
**caractérisé en ce que**
le poste de base comporte des moyens pour lire une caractéristique d'identification du support de telle manière que le type de support se trouvant dans le poste de base peut être identifié.

15. Poste de base selon l'une quelconque des revendications 12 à 14,
**caractérisé en ce que**
le poste de base à équiper des deux côtés de supports comporte un mécanisme rotatif.

16. Poste de base selon l'une quelconque des revendications 12 à 15,
**caractérisé en ce que**
le mécanisme de verrouillage est composé d'un système à rainure et languette dans lequel le support posé est sécurisé contre tout enlèvement.
